## Europäisches Patentamt
## European Patent Office
## Office européen des brevets

(11) Numéro de publication: **0 106 752**
**B1**

(12) **FASCICULE DE BREVET EUROPEEN**

(45) Date de publication du fascicule du brevet: **18.05.88**

(21) Numéro de dépôt: **83401927.5**

(22) Date de dépôt: **30.09.83**

(51) Int. Cl.⁴: **C 03 C 17/02,** C 03 C 17/34, G 02 B 3/14

(54) **Procédé de fabrication de guides d'ondes lumineuses.**

(30) Priorité: **05.10.82 FR 8216674**

(43) Date de publication de la demande:
**25.04.84 Bulletin 84/17**

(45) Mention de la délivrance du brevet:
**18.05.88 Bulletin 88/20**

(84) Etats contractants désignés:
**CH DE FR GB IT LI NL SE**

(56) Documents cités:
**EP-A-0 052 901**
**FR-A-2 178 176**
**GB-A-2 066 805**
**JP-A-57 081 213**
**US-A-3 134 689**
**US-A-4 111 521**
**US-A-4 116 530**
**US-A-4 153 328**

(73) Titulaire: **COMPAGNIE LYONNAISE DE TRANSMISSIONS OPTIQUES Société anonyme dite:**
**170, Quai de Clichy**
**F-92111 Clichy (FR)**

(72) Inventeur: **Le Sergent, Christian**
**20, rue de la Roche Garnier**
**F-91460 Marcoussis (FR)**
Inventeur: **Drouart, Alain**
**45, avenue Jean Moulin**
**F-77140 Nemours (FR)**

(74) Mandataire: **Weinmiller, Jürgen et al**
**Lennéstrasse 9 Postfach 24**
**D-8133 Feldafing (DE)**

Courier Press, Leamington Spa, England.

**Description**

La présente invention concerne des procédés de fabrication d'un guide d'ondes lumineuses, comportant une couche-support plane en un matériau d'indice de réfraction relativement faible, une couche plane de propagation des ondes lumineuses en un matériau d'indice de réfraction plus élevé que celui de la couche support, enserrée entre deux bandes d'un matériau d'indice de réfraction inférieur au sien propre, et une couche plane de confinement des ondes lumineuses en un matériau d'indice de réfraction plus faible que celui de la couche de propagation.

Le document GB—A—2 066 805 décrit un procédé de fabrication d'un tel guide d'ondes, dans lequel: on dépose sur un support en silice pure des particules de silice dopée par un oxyde augmentant l'indice de réfraction de la silice, dans un four à gradient de température défini; on retire les supports de ce four et les introduit dans un autre four à température homogène pour fritter les particules en une couche homogène; on masque certaines zones de cette couche destinées à former une couche de propagation des ondes lumineuses et élimine les autres zones de la couche homogène par attaque sélective; on dépose sur la couche de propagation et sur les autres parties du support où la couche homogène a été éliminée une seconde couche de silice dopée d'indice de réfraction différent de celui de la silice pure et inférieur à celui de la couche de propagation.

Un tel procédé nécessite un réglage précis pour obtenir une couche de propagation de l'épaisseur désirée; il est relativement complexe et coûteux.

L'invention a pour but de procurer des procédés de fabrication plus simples, plus sûrs et moins coûteux, tout en procurant des guides d'ondes lumineuses plans présentant un faible affaiblissement par unité de longueur.

Selon un premier procédé de fabrication conforme à l'invention,

a) on fait circuler dans un tube en silice pure, de section droite en forme de polygone régulier, des vapeurs d'un compose gazeux du silicium transformable en silice, d'un composé gazeux d'un élément dopant transformable en oxyde de ce dernier, l'élément dopant augmentant l'indice de réfraction de la silice, et d'un composé chimique oxydant, on chauffe les vapeurs à une température suffisante pour obtenir sur les parois internes du tube le dépôt d'une première couche de silice dopée,

(b) on fait circuler dans le tube des vapeurs d'un composé gazeux du silicium transformable en silice, d'une composé gazeux d'un élément dopant transformable en oxyde augmentant l'indice de réfraction de la silice, et d'un composé chimique oxydant, la proportion ou la nature de l'élément dopant étant cependant telles qu'il augmente dans une moindre mesure l'indice de réfraction de la silice, on chauffe les vapeurs à une température suffisante pour obtenir sur la couche précédemment déposée le dépôt d'une seconde couche de silice dopée d'indice de réfraction un peu inférieur à celui de la première couche,

c) on scie les parois du tube parallèlement à ses arêtes de façon à obtenir plusieurs plaquettes planes munies de deux couches successives de silice différemment dopée,

d) on crée sur les bords de ces plaquettes des bandes d'un matériau d'indice de réfraction inférieur à celui de la première couche de silice dopée.

On crée de préférence sur les bords des plaquettes planes les bandes d'un matériau d'indice de réfraction inférieur à celui de la première couche de silice dopée, soit en homogénéisant dans la zone de ces bandes l'indice de réfraction par fusion de la matière ou vaporisation des dopants, soit en introduisant dans la matière dans la zone de ces bandes des dopants abaissant l'indice de réfraction.

Selon un second procédé de fabrication,

a) on fait circuler dans un tube en silice pure de section droite en forme de polygone régulier des vapeurs d'un composé gazeux du silicium transformable en silice, d'un composé gazeux d'un élément dopant transformable en oxyde de ce dernier, l'élément dopant augmentant l'indice de réfraction de la silice, et d'un composé chimique oxydant, l'on chauffe les vapeurs à une température suffisante pour obtenir sur les parois internes du tube le dépôt d'une première couche de silice dopée,

b) on scie les paroi du tube parallèlement à ses arêtes de façon à obtenir plusieurs plaquettes planes munies d'une couche de silice dopée d'indice de réfraction supérieur à celui de la silice pure,

c) on élimine les bords de la couche de silice dopée par usinage par faisceau d'électrons ou faisceau laser, ou bien par attaque chimique sélective, après masquage de sa zone centrale,

d) on introduit chaque plaquette à l'intérieur d'un second tube en silice pure de section droite en forme de polygone analogue au tube à partir duquel ont été préparées les plaquettes,

e) on fait circuler dans le second tube des vapeurs d'un composé gazeux du silicium transformable en silice, d'un composé gazeux d'un élément dopant transformable en oxyde de ce dernier, la proportion ou la nature de l'élément dopant étant cependant telles qu'il augmente dans une moindre mesure l'indice de réfraction de la silice, on chauffe les vapeurs à une température suffisante pour obtenir sur la couche précédemment déposée et sur les bords des plaquettes le dépôt d'une seconde couche de silice dopée d'indice de réfraction un peu inférieur à celui de la première couche.

Selon un troisième procédé de fabrication,

a) on fait circuler dans un tube en silice pure de section droite en forme de polygone régulier des vapeurs d'un composé gazeux du silicium transformable en silice, d'un composé gazeux d'un élément dopant transformable en oxyde de ce dernier, l'élément dopant diminuant l'indice de réfraction de la silice, et d'un composé chimique oxydant, l'on chauffe les vapeurs à une température suffisante pour obtenir sur les parois internes du tube le dépôt d'une première couche de silice dopée,

b) on scie les parois du tube parallèlement à ses arêtes de façon à obtenir plusieurs plaquettes planes munies d'une couche de silice dopée d'indice de réfraction inférieur à celui de la silice pure,

c) on augmente l'indice dans la zone centrale de chaque plaquette en vaporisant le dopant par un faisceau d'électrons ou un faisceau laser, ou en y implantant ou diffusant un dopant différent augmentant l'indice de réfraction de la silice,

d) on introduit chaque plaquette à l'intérieur d'un second tube en silice poure de section droite en forme de polygone analogue au tube à partir duquel ont été préparées les plaquettes,

e) on fait circuler dans le second tube des vapeurs d'un composé gazeux du silicium transformable en silice, d'un composé gazeux d'un élément dopant transformable en oxyde de ce dernier, la proportion ou la nature de l'élément dopant étant telles qu'elles procurent une couche d'indice de réfraction inférieur à celui obtenu dans l'opération c), et d'un composé chimique oxydant, on chauffe les vapeurs à une température suffisante pour obtenir sur la couche précédente des plaquettes et sur ses bords le dépôt d'une seconde couche de silice d'indice de réfraction un peu inférieur à celui de la zone centrale de la première couche.

Il est décrit ci-après, à titre d'exemples et en référence aux figures du dessin annexé, des opérations de fabrication de guides d'ondes optiques selon le procédé de l'invention, et quelques circuits optiques réalisables à l'aide de ces guides d'ondes.

La figure 1 représente un tube de silice pure de section droite carrée sur les parois internes duquel ont été déposées des couches de silice dopée au cours de la fabrication d'un guide d'ondes.

Les figures 2A et 2B représentent respectivement en coupe transversale et en coupe par un plan horizontal un guide d'ondes selon l'invention.

La figure 3 représente un guide d'ondes assurant la division du faisceau lumineux en deux branches.

La figure 4 représente une guide d'ondes à deux branches dont l'une, munie d'une électrode de commande, permet un déphasage de la moitié du signal optique qui y circule, et formant ainsi atténuateur ou modulateur d'amplitude.

La figure 5 représente un guide d'ondes à deux branches, munies chacune d'un réseau de diffraction, permettant de séparer deux fréquences de l'onde initiale.

La figure 6 représente un guide d'ondes muni d'une photodiode formant émetteur.

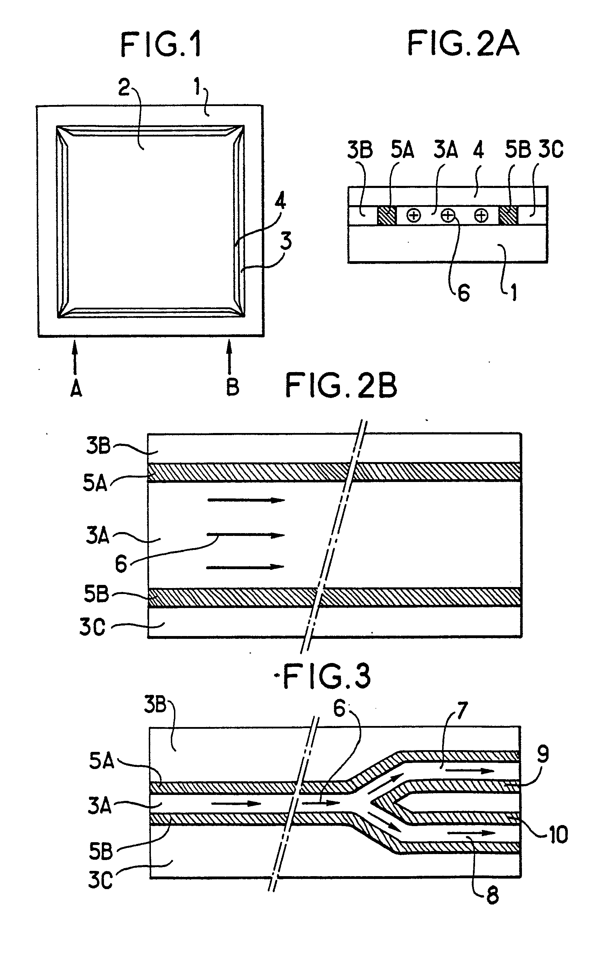

Dans la figure 1, le tube 1 en silice pure d'indice de réfraction $n_0$, de section droite carrée, entourant le canal 2, a été revêtu d'un premier dépôt interne d'une première couche 3 de silice dopée d'indice de réfraction $n_1$ un peu supérieur, par exemple d'une couche de silice dopée à l'oxyde de germanium, d'épaisseur comprise entre 1 et 60 microns. Il a été ensuite revêtu d'une seconde couche 4 de silice dopée d'indice de réfraction $n_2$ inférieur à celui de la première couche, par exemple d'une couche de silice dopée à l'aide d'une proportion moindre d'oxyde de germanium. Les épaisseurs de ces couches ont été notablement exagérées par rapport à celles du support pour plus de clarté du dessin.

En vue d'obtenir les guides d'ondes plans, on découpe alors les parois du tube selon des directions A et B parallèles à ses arêtes.

On forme alors sur les bords de la couche d'indice de réfraction $n_1$ des bandes limites d'indice de réfraction $n_3 < n_1$, confinant latéralement le faisceau lumineux à l'intérieur de la couche d'indice $n_1$. Ceci peut se faire par exemple en homogénéisant l'indice sur le tracé des bandes limites par fusion de la matière ou évaporation des dopants, selon l'épaisseur, à l'aide d'un laser à gaz carbonique ou d'un pinceau d'électrons d'énergie appropriée, ou bien en introduisant sur le tracé des bandes limites des dopants susceptibles d'abaisser l'indice, tels que l'anhydride borique ou le fluor, dans l'épaisseur des deux couches d'indices $n_1$ et $n_2$, soit par diffusion, soit par implantation ionique.

On peut aussi, après avoir déposé à l'intérieur du tube de section droite carrée la seule couche de propagation d'indice $n_1$ et découpé celui-ci en plaquettes, éliminer cette couche sur le tracé des bandes limites par usinage par faisceau d'électrons ou par faisceau laser, ou bien par attaque chimique sélective après masquage du tracé de la bande de propagation des ondes. On dépose ensuite la série de couches d'indice $n_2 < n_1$ en introduisant les plaquettes dans un autre tube à l'intérieur duquel on effectuera le dépôt comme précédemment.

On peut encore, à partir d'une plaquette de silice sur laquelle a été réalisé le dépôt d'une couche $n_1 < n_0$ à l'aide d'un dopant anhydride borique ou fluor, ajuster l'indice sur le tracé de la bande de propagation à une valeur $n_4 > n_1$, soit par évaporation de dopant grâce à un faisceau laser ou un faisceau d'électrons, soit par implantation ou diffusion d'un dopant complémentaire élevant l'indice, tel qu'un composé du phosphore, ou l'oxyde de germanium. On effectue alors à la surface de la plaquette le dépôt d'une couche d'indice $n_2 < n_4$ en introduisant la plaquette dans un autre tube à l'intérieur duquel on effectuera le dépôt d'une nouvelle couche comme précédemment.

On obtient par ces différents procédés des guides d'ondes lumineuses plans présentant la structure représentée en figures 2A et 2B. Sur le support 1 en silice pure d'indice $n_0$, la couche de propagation 3A d'indice $n_1 > n_0$ est limitée latéralement par les bandes de confinement 5A, 5B d'indice $n_3 < n_1$, qui la séparent des bords 3B, 3C, de même indice $n_1$. La couche 3A est recouverte par la couche supérieure 4 d'indice

$n_2 < n_1$. Le rayonnement lumineux circulant dans la couche de propagation perpendiculairement au plan de la figure 2A et parallèlement à celui de la figure 2B est représenté par les flèches 6.

La figure 3 représente un élément de guide d'ondes assurant une division du faisceau lumineux 6. La couche de propagation 3A se divise en deux branches 7, 8, toutes deux délimitées par les bandes de confinement 5A, 5B et 9, 10.

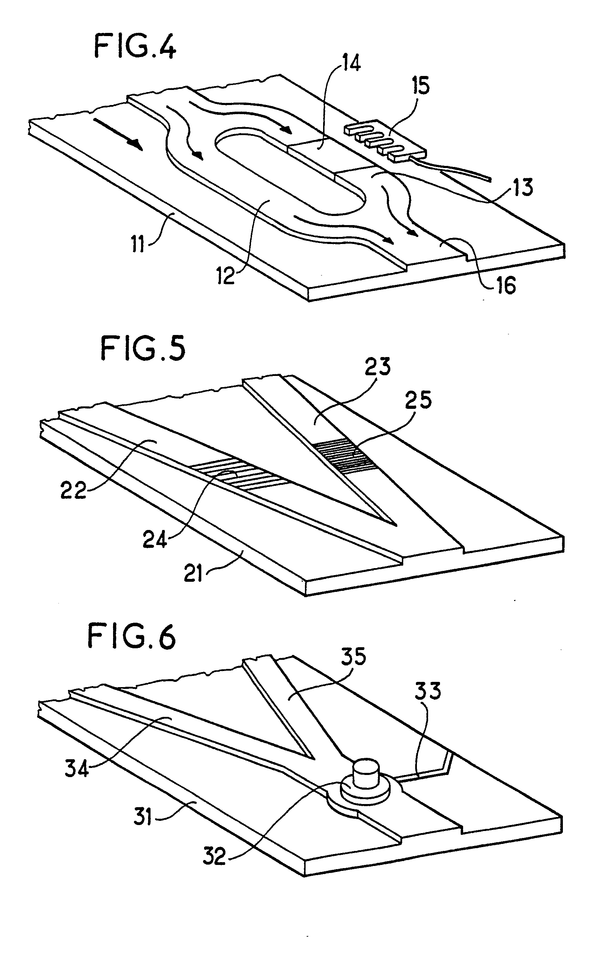

Dans les figures 4, 5 et 6, les bandes de confinement et la couche supérieure d'indice inférieur à celui de la couche de propagation n'ont pas été représentées, pour plus de clarté.

Dans l'élément de guide d'ondes 11 de la figure 4, la couche de propagation se divise en deux branches 12, 13. La branche 13 comporte un dépôt d'oxyde de zinc 14 dont l'indice est commandé par l'électrode métallique 15 déposée par projection sous vide.

Le signal optique étant divisé en deux branches, et celui passant dans la branche 13 pouvant être commandé électriquement, on peut obtenir dans la suite 16 du guide d'ondes un déphasage d'une moitié du signal optique, qui pourra s'ajouter ou se retrancher de l'autre moitié. On obtient ainsi un atténuateur ou modulateur d'amplitude commandé par une tension électrique.

Dans l'élément de guide d'ondes 21 de la figure 5, les branches 22, 23 de la couche de propagation sont munies par gravure de stries très rapprochées 24, 25, formant réseau de diffraction.

En donnant aux stries des espacements différents, on peut séparer deux fréquences de rayonnement en ne laissant passer chacune que dans l'une des deux branches.

L'élément de guide d'ondes 31 de la figure 6 est muni d'une photodiode 32. Celle-ci peut être émettrice ou réceptrice, et être couplée à un guide d'ondes par perçage ou par dépôt local d'arséniure de gallium ou de phosphure d'indium. La photodiode est commandée à l'aide de la bande métallisée 33. La couche de propagation se divise en deux branches 34, 35.

En combinant divers éléments de guide d'ondes plans tels que décrits ci-dessus, on peut obtenir des circuits intégrés optiques très variés.

## Revendications

1. Procédé de fabrication d'un guide d'ondes lumineuses, comportant une couche-support plane en un matériau d'indice de réfraction relativement faible, une couche plane de propagation des ondes lumineuses en un matériau d'indice de réfraction plus élevé que celui de la couche-support, enserrée entre deux bandes d'un matériau d'indice de réfraction inférieur au sein propre, et une couche plane de confinement des ondes lumineuses en un matériau d'indice de réfraction plus faible que celui de la couche de propagation, caractérisé en ce que

a) on fait circuler dans un tube en silice pure (1), de section droite en forme de polygone régulier des vapeurs d'un composé gazeux du silicium transformable en silice, d'un composé gazeux d'un élément dopant transformable en oxyde de ce dernier, l'élément dopant augmentant l'indice de réfraction de la silice, et d'un composé chimique oxydant, on chauffe les vapeurs à une température suffisante pour obtenir sur les parois internes du tube le dépôt d'une première couche de silice dopée (3A),

b) on fait circuler dans le tube des vapeurs d'un composé gazeux du silicium transformable en silice, d'un composé gazeux d'un élément dopant transformable en oxyde augmentant l'indice de réfraction de la silice, et d'un composé chimique oxydant, la proportion ou la nature de l'élément dopant étant cependant telles qu'il augmente dans une moindre mesure l'indice de réfraction de la silice, on chauffe les vapeurs à une température suffisante pour obtenir sur la couche précédemment déposée le dépôt d'une seconde couche de silice dopée (4) d'indice de réfraction un peu inférieur à celui de la première couche,

c) on scie les parois du tube parallèlement à ses arêtes de façon à obtenir plusieurs plaquettes planes munies de deux couches successives de silice différemment dopée,

d) on crée sur les bords de ces plaquettes des bandes (5A, 5B) d'un matériau d'indice de réfraction inférieur à celui de la première couche de silice dopée.

2. Procédé selon la revendication 1, caractérisé en ce que l'on crée sur les bords des plaquettes planes les bandes d'un matériau d'indice de réfraction inférieur à celui de la première couche de silice dopée en homogénéisant dans la zone de ces bandes l'indice de réfraction par fusion de la matière ou vaporisation des dopants.

3. Procédé selon la revendication 1, caractérisé en ce que l'on crée sur les bords des plaquettes planes les bandes d'un matériau d'indice de réfraction inférieur à celui de la première couche de silice dopée en introduisant dans la matière dans la zone de ces bandes des dopants abaissant l'indice de réfraction.

4. Procédé de fabrication d'un guide d'ondes lumineuses comportant une couche-support plane en un matériau d'indice de réfraction relativement faible, une couche plane de propagation des ondes lumineuses en un matériau d'indice de réfraction plus élevé que celui de la couche-support, enserrée entre deux bandes d'un matériau d'indice de réfraction inférieur au sein propre, et une couche plane de confinement des ondes lumineuses en un matériau d'indice de réfraction plus faible que celui de la couche de propagation, caractérisé en ce que

a) on fait circuler dans un tube en silice pure (1) de section droite en forme de polygone régulier des vapeurs d'un composé gazeux du silicium transformable en silice, d'un composé gazeux d'un élément dopant transformable en oxyde de ce dernier, l'élément dopant augmentant l'indice de réfraction de la silice, et d'un composé chimique oxydant, l'on chauffe les vapeurs à une température suffisante pour obtenir sur les parois internes du tube le dépôt d'une première couche (3A) de silice dopée,

b) on scie les parois du tube parallèlement à ses arêtes de façon à obtenir plusieurs plaquettes planes munies d'une couche de silice dopée d'indice de réfraction supérieur à celui de la silice pure,

c) on élimine les bords de la couche de silice dopée par usinage par faisceau d'électrons ou faisceau laser, ou bien par attaque chimique sélective, après masquage de sa zone centrale,

d) on introduit chaque plaquette à l'intérieur d'un second tube en silice pure de section droite en forme de polygone analogue au tube à partir duquel ont été préparées les plaquettes,

e) on fait circuler dans le second tube des vapeurs d'un composé gazeux du silicium transferable en silice, d'un composé gazeux d'un élément dopant transformable en oxyde de ce dernier, la proportion ou la nature de l'élément dopant étant cependant telles qu'il augmente dans une moindre mesure l'indice de réfraction de la silice, on chauffe les vapeurs à une température suffisante pour obtenir sur la couche précédemment déposée et sur les bords des plaquettes le dépôt d'une seconde couche de silice dopée (4) d'indice de réfraction un peu inférieur à celui de la première couche.

5. Procédé de fabrication d'un guide d'ondes lumineuses comportant une couche-support en un matériau d'indice de réfraction relativement faible, une couche plane de propagation des ondes lumineuses en un matériau d'indice de réfraction plus élevé que celui de la couche-support, enserrée entre deux bandes d'un matériau d'indice de réfraction inférieur au sein propre, et une couche plane de confinement des ondes lumineuses en un matériau d'indice de réfraction plus faible que celui de la couche de propagation, caractérisé en ce que

a) on fait circuler dans un tube en silice pure (1) de section droite en forme de polygone régulier des vapeurs d'un composé gazeux du silicium transformable en silice, d'un composé gazeux d'un élément dopant transformable en oxyde de ce dernier, l'élément dopant diminuant l'indice de réfraction de la silice, et d'un composé chimique oxydant, on chauffe les vapeurs à une température suffisante pour obtenir sur les parois internes du tube le dépôt d'une première de silice dopée (3A),

b) on scie les parois du tube parallèlement à ses arêtes de façon à obtenir plusieurs plaquettes planes munies d'une couche de silice dopée d'indice de réfraction inférieur à celui de la silice pure,

c) on augmente l'indice dans la zone centrale de chaque plaquette en vaporisant le dopant par un faisceau d'électrons ou un faisceau laser, ou en y implantant ou diffusant un dopant différent augmentant l'indice de réfraction de la silice,

d) on introduit chaque plaquette à l'intérieur d'un second tube en silice pure de section droite en forme de polygone analogue au tube à partir duquel ont été préparées les plaquettes,

e) on fait circuler dans le second tube des vapeurs d'une composé gazeux du silicium transformable en silice, d'une composé gazeux d'un élément dopant transformable en oxyde de ce dernier, la proportion ou la nature de l'élément dopant étant telles qu'elles procurent une couche d'indice de réfraction inférieur à celui obtenu dans l'opération c), et d'un composé chimique oxydant, on chauffe les vapeurs à une température suffisante pour obtenir sur la couche précédente des plaquettes et sur ses bords le dépôt d'une seconde couche de silice (4) d'indice de réfraction un peu inférieur à celui de la zone centrale de la première couche.

**Patentansprüche**

1. Verfahren zur Herstellung eines Lichtwellenleiters, mit einer ebenen Trägerschicht aus einem Material mit einem relativ niedrigen Brechungsindex, einer ebenen Schicht, in der die Forpflanzung der Lichtwellen erfolgt und die aus einem Material mit einem höheren Brechungsindex als dem der Trägerschicht besteht, wobei diese Schicht zwischen zwei Bänder eines Materials mit einem niedrigeren Brechungsindex als sein eigener eingefügt ist, und mit einer ebenen Schicht zur Begrenzung der Lichtwellen, die aus einem Material eines niedrigeren Brechungsindex als der der Schicht besteht, in der die Lichtwellen sich fortpflanzen, dadurch gekennzeichnet, daß

a) man durch ein Rohr (1) aus reinem Siliciumdioxid mit einem regelmäßig polygonalen Querschnitt Dämpfe einer gasförmigen Siliciumverbindung, die in Siliciumdioxid verwandelt werden kann, einer gasförmigen Verbindung eines Dotierelements, das sich in ein Oxid dieses Elements verwandeln läßt, wobei das dotierende Element den Brechungsindex des Siliciumdioxid erhöht, und einer oxidierenden chemischen Verbindung hindurchleitet, daß man die Dämpfe auf eine Temperatur erhitzt, die ausreicht, um an den Innenwänden des Rohrs eine erste Schicht aus dotiertem Siliciumdioxid (3A) aufzudampfen.

b) daß man durch das Rohr Dämpfe einer gasförmigen Siliciumverbindung, die in Siliciumdioxid verwandelt werden kann, einer gasförmigen Verbindung eines Dotierelements, die in ein Oxid verwandelt werden kann, das den Brechungsindex des Siliciumdioxids erhöht, und einer oxidierenden chemischen Verbindung hindurchleitet, wobei der Anteil oder die Art des Dotierelements jedoch so gewählt ist, daß dadurch der Brechungsindex des Siliciumdioxids in geringerem Maß erhöht wird, daß die Dämpfe auf eine Temperatur erhitzt werden, die ausreicht, um auf die vorher aufgebrachte Schicht eine zweite Schicht aus dotierten Siliciumdioxid (4) mit einem Brechungsindex aufzubringen, der geringfügig unter dem der ersten Schicht liegt,

c) daß die Wände des Rohrs parallel zu seinen Kanten zersägt werden, so daß mehrere ebene Plättchen entstehen, die zwei aufeinanderfolgende Siliciumdioxidschichten unterschiedlicher Dotierung besitzen,

d) daß an den Rändern dieser Plättchen Bänder (5A, 5B) aus einem Material mit einem niedrigeren Brechungsindex als dem der ersten Schicht dotierten Siliciumdioxid erzeugt werden.

2. Verfahren nach Anspruch 1, dadurch gekennzeichnet, daß auf den Rändern der ebenen Plättchen die Bänder aus einem Material mit einem niedrigeren Brechungsindex als dem der ersten dotierten Siliciumdioxidschicht dadurch erzeugt werden, daß in der Zone dieser Bänder der Brechungsindex durch Schmelzen des Materials oder Verdampfung der Dotierstoffe homogenisiert wird.

3. Verfahren nach Anspruch 1, dadurch gekennzeichnet, daß man an den Rändern der ebenen Plättchen die Bänder aus einem Material niedrigeren Brechungsindex als dem der ersten dotierten Siliciumdioxidschicht erzeugt, indem man in das Material in der Zone dieser Ränder Dotierstoffe einführt, die den Brechungsindex absenken.

4. Verfahren zur Herstellung eines Lichtwellenleiters, mit einer ebenen Trägerschicht aus einem Material mit einem relativ niedrigen Brechungsindex, einer ebenen Schicht, in der die Fortpflanzung der Lichtwellen erfolgt und die aus einem Material mit einem höheren Brechungsindex als dem der Trägerschicht besteht, wobei diese Schicht zwischen zwei Bänder eines Materials mit einem niedrigeren Brechungsindex als sein eigener eingefügt ist, und mit einer ebenen Schicht zur Begrenzung der Lichtwellen, die aus einem Material eines niedrigeren Brechungsindex als der der Schicht besteht, in der sich die Lichtwellen fortpflanzen, dadurch gekennzeichnet, daß

a) man durch ein Rohr (1) aus reinem Siliciumdioxid mit einem regelmäßig polygonalen Querschnitt Dämpfe einer gasförmigen Siliciumverbindung, die in Siliciumdioxid verwandelt werden kann, einer gasförmigen Verbindung eines Dotierelements, das sich in ein Oxid dieses Elements verwandeln läßt, wobei das dotierende Element den Brechungsindex des Siliciumdioxid erhöht, und einer oxidierenden chemischen Verbindung hindurchleitet, daß man die Dämpfe auf eine Temperatur erhitzt, die ausreicht, um an den Innenwänden des Rohrs eine erste Schicht aus dotiertem Siliciumdioxid (3A) aufzudampfen,

b) daß die Wände des Rohrs parallel zu seinen Kanten zersägt werden, so daß mehrere ebene Plättchen entstehen, die eine Schicht aus dotiertem Siliciumdioxid aufweisen, dessen Brechungsindex größer als der von reinem Siliciumdioxid ist,

c) daß die Ränder der Schicht aus dotiertem Siliciumdioxid durch Bearbeitung mit einem Elektronen- oder Laserstrahl oder durch selektiven chemischen Angriff nach dem Abdecken der zentralen Zone mit einer Maske entfernt werden,

d) daß jedes Plättchen in ein zweites Rohr aus reinem Siliciumdioxid mit einem polygonalen Querschnitt ähnlich dem Rohr eingebracht werden, aus dem die Plättchen hergestellt worden sind,

e) daß man durch das zweite Rohr Dämpfe einer gasförmigen Siliciumverbindung, die in Siliciumdioxid umwandelbar ist, einer gasförmigen Verbindung eines Dotierelements, die in ein Oxid dieses Elements verwandelt werden kann, wobei der Anteil oder die Art des Dotierelements jedoch so gewählt ist, daß dadurch der Brechungsindex des Siliciumdioxid in geringerem Maß erhöht wird, daß die Dämpfe auf eine Temperatur erhitzt werden, die ausreicht, um auf die vorher aufgebrachte Schicht und auf die Ränder des Plättchens eine zweite Schicht aus dotierten Siliciumdioxid (4) mit einem Brechungsindex aufzubringen, der geringfügig unter dem der ersten Schicht liegt.

5. Verfahren zur Herstellung von Lichtwellenleitern, mit einer Trägerschicht aus einem Material mit einem relativ niedrigen Brechungsindex, einer ebenen Schicht, in der die Fortpflanzung der Lichtwellen erfolgt und die aus einem Material mit einem höheren Brechungsindex als dem der Trägerschicht besteht, wobei diese Schicht zwischen zwei Bänder eines Materials mit einem niedrigeren Brechungsindex als sein eigener eingefügt ist, und mit einer ebenen Schicht zur Begrenzung der Lichtwellen, die aus einem Material eines niedrigeren Brechungsindex als der der Schicht besteht, in der sich die Lichtwellen fortpflanzen, dadurch gekennzeichnet, daß

a) man durch ein Rohr (1) aus reinem Siliciumdioxid mit einem regelmäßig polygonalen Querschnitt Dämpfe einer gasförmigen Siliciumverbindung, die in Siliciumdioxid verwandelt werden kann, einer gasförmigen Verbindung eines Dotierelements, das sich in ein Oxid dieses Elements verwandeln läßt, wobei das dotierende Element den Brechungsindex des Siliciumdioxid verringert, und einer oxidierenden chemischen Verbindung hindurchleitet, daß man die Dämpfe auf eine Temperatur erhitzt, die ausreicht, um an den Innenwänden des Rohrs eine erste Schicht aus dotiertem Siliciumdioxid (3A) aufzudampfen,

b) daß die Wände der Rohrs parallel zu seinen Kanten zersägt werden, so daß mehrere ebene Plättchen entstehen, die eine Schicht aus dotiertem Siliciumdioxid besitzen, dessen Brechungsindex geringer als der von reinem Siliciumdioxid ist

c) daß man den Brechungsindex in der zentralen Zone jedes Plättchens dadurch erhöht, daß man das Dotiermittel mit einem Elektronen- oder Laserstrahl verdampft oder dort ein anderes Dotiermittel implantiert oder diffundiert, das den Brechungsindex des Siliciumdioxids erhöht,

d) daß jedes Plättchen in ein zweites Rohr aus reinem Siliciumdioxid mit einem polygonalen Querschnitt ähnlich dem Rohr eingebracht werden, aus dem die Plättchen hergestellt worden sind,

e) daß man durch das zweite Rohr Dämpfe einer gasförmigen Siliciumverbindung, die in Siliciumdioxid umwandelbar ist, einer gasförmigen Verbindung eines Dotierelements, die in ein Oxid dieses Elements verwandelt werden kann, hindurchleitet, wobei der Anteil oder die Art des Dotierelements so gewählt ist, daß sich ein niedrigerer Brechungsindex als der gemäß Verfahrensschritt (c) erhaltene ergibt, und einer oxidierenden chemischen Verbindung, daß die Dämpfe auf eine ausreichend hohe Temperatur erhitzt werden, um aud der vorher aufgebrachten Schicht der Plättchen und auf den Rändern eine zweite Schicht Siliciumdioxid (4) mit einem geringfügig geringeren Brechungsindex als dem der zentralen Zone der ersten Schicht zu erhalten.

**Claims**

1. A method of fabricating an optical waveguide comprising a plane substrate layer made of a material having a relatively low refractive index, a plane light propagation layer made of a material having a higher refractive index than the substrate layer, inserted between two strips made of a material having a refractive index lower than its own, and a plane light wave confining layer made of a material having a lower refraction index than the propagation layer, characterized in that

a) in a pure silica tube (1) having a regular polygonal cross-section, there are made to circulate vapours of a gaseous compound of silicon transformable into silica, of a gaseous compound of a doping agent transformable into an oxide of said agent, the doping agent increasing the refractive index of the silica, and of an oxidizing chemical compound, the vapours being heated up to a temperature which is sufficiently high to cause the inner walls of the tube to be coated with a first layer of doped silica (3A),

b) in the tube there are made to circulate vapours of a gaseous silicon compound transformable into silica, of a gaseous compound of a doping agent transformable into an oxide serving to increase the refractive index of silica, and of an oxidizing chemical compound, the quantity or nature of the doping agent being, however, such, that it increases the refractive index of the silica to a smaller extent, the vapours being heated up to a sufficiently high temperature to obtain on the previously deposited layer a second layer of doped silica (4) having a slightly lower refractive index than the first layer,

c) the walls of the tube are sawed parallel to its edges to obtain several plane wafers supplied with two successive layers of differently doped silica,

d) on the edges of said wafers strips (5A, 5B) are then created of a material having a lower refractive index than the first layer of doped silica.

2. A method according to claim 1, characterized in that the strips of a material having a lower refractive index than the first doped silica layer are created on the edges of the plane wafers by homogenizing the refractive index in the zone of these strips by melting the material or evaporating the doping agents.

3. A method according to claim 1, characterized in that the strips made of a material having a lower refractive index than the first doped silica layer are created on the edges of the plane wafers by introducing doping agents which lower the refractive index into the material in the zone of these strips.

4. A method of fabricating an optical waveguide comprising a plane substrate layer made of a material having a relatively low refractive index, a plane light propagation layer made of material having a higher refractive index than the substrate layer, inserted between two strips made of a material having a refractive index lower than its own, and a plane light wave confining layer made of a material having a lower refraction index than the propagation layer, characterized in that

a) in a pure silica tube (11) having a regular polygonal cross-section, there are made to circulate vapours of a gaseous compound of silicon transformable into silica, of a gaseous compound of a doping agent transformable into an oxide of said agent, the doping agent increasing the refractive index of the silica, and of an oxidizing chemical compound, the vapours being heated up to a temperature which is sufficiently high to cause the inner walls of the tube to be coated with a first layer of doped silica (3A),

b) the walls of the tube are sawed parallel to its edges to obtain several plane wafers supplied with a layer of doped silica having a higher refractive index than pure silica,

c) the edges of the doped silica layer are eliminated by an electron beam or a laser beam treatment or else by selective etching, performed after having masked its central zone,

d) each wafer is introduced into a second tube made of pure silica and having a polygonal cross-section analog to the tube from which the wafers have been prepared,

e) in the second tube there are made to circulate vapours of a gaseous silicon compound transformable into silica, of a gaseous compound of a doping agent transformable into an oxide of the latter, the quantity or nature of the doping agent being, however, such, that it increases the refractive index of the silica to a smaller extent, the vapours being heated up to a sufficiently high temperature to obtain on the previously deposited layer and on the edges of the wafers a second layer of doped silica (4) having a slightly lower refractive index than the first layer.

5. A method of fabricating an optical waveguide comprising a substrate layer made of a material having a relatively low refractive index, a plane light propagation layer made of a material having a higher refractive index than the substrate layer, inserted between two strips made of a material having a refractive index lower than its own, and a plane light wave confining layer made of a material having a lower refraction index than the propagation layer, characterized in that

a) in a pure silica tube (1) having a regular polygonal cross-section, there are made to circulate vapours of a gaseous compound of silicon transformable into silica, of a gaseous compound of a doping agent transformable into an oxide of said agent, the doping agent reducing the refractive index of the silica, and of an oxidizing chemical compound, the vapours being heated up to a temperature which is sufficiently high to cause the inner walls of the tube to be coated with a first layer of doped silica (3A),

b) the walls of the tube are sawed parallel to its edges to obtain several plane wafers supplied with a layer of doped silica having a lower refractive index than pure silica,

c) the index is increased in the central zone of each wafer via evaporation of the doping agent by an electron beam or a laser beam, or else by implanting or diffusing a different doping agent which increases the refractive index of silica,

d) each wafer is introduced into a second tube made of pure silica and having a polygonal cross-section analog to the tube, from which the wafers have been prepared,

e) in the second tube there are made to circulate vapours of a gaseous silicon compound transformable into silica, of a gaseous compound of a doping agent transformable into an oxide of the latter, the quantity or nature of the doping agent being such, that a layer having a lower refractive index is obtained than that according to step c), and of an oxidizing chemical compound, the vapours being heated up to a sufficiently high temperature to obtain on the previously deposited layer of the wafers and its edges a second layer of silica (4) having a slightly lower refractive index than that of the central zone of the first layer.

0 106 752

FIG.1

FIG.2A

FIG.2B

FIG.3

## FIG.4

## FIG.5

## FIG.6